# EUROPÄISCHE PATENTSCHRIFT

(11) **EP 1 299 916 B1**
(45) Veröffentlichungstag und Bekanntmachung des Hinweises auf die Patenterteilung: **07.07.2004**
(21) Anmeldenummer: 01949450.9
(22) Anmeldetag: 29.06.2001
(51) Int. Cl.: H01M 4/66

(54) **VERFAHREN ZUR HERSTELLUNG EINES METALLISIERTEN STOFFS, SOWIE BATTERIE UND BRENNSTOFFZELLE, WELCHE DIESEN ENTHALTEN**
METHOD FOR PRODUCING METALLISED MATERIAL AND BATTERY AND FUEL CELL CONTAINING THIS MATERIAL
PROCEDE DE PRODUCTION DE MATERIAU METALLISE ET PILE ET PILE A COMBUSTIBLE CONTENANT CE MATERIAU

(30) Priorität: 29.06.2000 DE 10031633
(43) Veröffentlichungstag der Anmeldung: 09.04.2003
(73) Patentinhaber: Kollmann, Wolfgang, 8664 Veitsch (AT); Kollmann, Helga, 8664 Veitsch (AT)
(72) Erfinder: Kollmann, Wolfgang, 8664 Veitsch (AT); Kollmann, Helga, 8664 Veitsch (AT)
(74) Vertreter: Lippich, Wolfgang, Dipl.-Phys, Dr.rer.nat.
(86) Internationale Anmeldenummer: PCT/EP2001/007467
(87) Internationale Veröffentlichungsnummer: WO 2002/001656

(56) Entgegenhaltungen:
- EP-A- 0 791 973
- DE-A- 2 743 768
- DE-A- 4 004 106
- US-A- 5 584 893
- US-A- 5 616 152
- US-A- 5 789 110
- US-A- 6 096 101

## Beschreibung

Die Erfindung betrifft ein Verfahren zur Herstellung, eines metallisierten Stoffs sowie eine Batterie und Brennstoffzelle, welche diesen enthalten.

Da der metallisierte Stoff und seine Herstellung in allen Aspekten der Erfindung eine Rolle spielt, wird er zuerst erörtert.

Unter Galvanisieren wird in der vorliegenden Erfindung eine Strom-unterstütze elektolytische Abscheidung eines Metalls oder auch Nichtmetalls, das als Ion in einer wäßrigen Lösung vorliegt, ggf. zusammen mit einer Dispersion eines nicht löslichen, aber in der wäßrigen Lösung dispergierbaren Materials, auf einem leitfähigen Substrat verstanden. Unter außenstromloser Abscheidung wird eine nicht durch äußeren Strom unterstützte, sondern durch ein Reduktionsmittel herbeigeführte Abscheidung eines Metalles oder einer Legierung oder eines dispergierten Materials auf einem Substrat verstanden.

Unter "Stoff" wird hier z.B. ein Gewirk, ein Vlies, ein Gewebe o.dgl. verstanden, unter "Faser" z.B. ein Filament oder eine Zusammenfassung aus Filamenten. Bevorzugt befaßt sich die Erfindung mit einem Stoff, der Gewebe aus Kunststoff-Einzelfilamenten ist.

Das Merkmal eines Stoffes ist eine überwiegend flächige Erstreckung mit verhältnismäßig geringer Tiefe. Ein Stoff ist dem Grunde nach nicht steif, sondern mehr oder weniger weich.

Elektrisch leitfähig gemachte Stoffe werden in der Technik in vielfältiger Weise eingesetzt, etwa bei der Filtertechnik, bei der es auf eine definierte Maschengröße ankommt. Besonders wichtig ist die Verwendung eines solchen Stoffes bei der Herstellung von Batterien, wo man ihn anstelle von Blech- oder Gitterelektroden verwendet, weil seine Oberfläche sehr viel größer ist und überdies sein Gewicht geringer.

Beispielsweise sind ein Massenträger für Elektroden galvanischer Primär- oder Sekundärelemente aus einer maschenoffenen dreidimensionalen Netzwerkstruktur aus mit einer oder mehreren gut leitenden , dünnen Metallschichten, lückenlos überzogenen Kunststoffäden und daraus hergestellte Elektroden aus der DE 195 03 447 A1 bekannt. Allerdings ist über die Kreuzungspunkte der Fäden nichts ausgesagt, insbesondere nicht, daß sie während der Galvanisierung gegeneinander bewegt werden, so daß davon auszugehen ist, daß die Kreuzungspunkte in der Netzwerkstruktur verbacken sind.

Ein weiterer ein Elektrodengerüst bildender Stoff in Form von Nadelfilz ist durch die DE 40 04 106 bekannt und ist zum Verbessern der Festigkeit zweifach genadelt. Dabei wird der Filz aber auch steifer und dichter. Bei der zunächst chemischen und dann galvanischen Metallisierung entstehen an sich überkreuzenden Fasern verbindende, die Fasern verbackenden Knotenpunkte aus Metall, die die Steifigkeit des Filzes in an sich gewünschter Weise noch weiter erhöhen, aber insgesamt die Oberflächengröße verringern.

Solche Knotenpunkte verringern die zur Verfügung stehende Oberfläche der Fasern, stellen aber zuverlässig einen Kontakt her, so daß man bisher keine Bemühungen unternahm, ihre Bildung zu vermeiden.

Die DE 27 43 768 beschreibt dagegen ein Gewebe, das im stromlosen Tauchbad metallisiert wird und bei dem die Schichtdicke aus Metall 0,3 *µ*m nicht übersteigen darf. Somit setzt das beschichtete Gewebe dem Durchfluß von elektrischem Strom einen Widerstand entgegen, so daß das bekannte, beschichtete Gewebe für elektrisch beheizbare Bekleidung vorgesehen ist. Ob überkreuzte Fasern beim Metallisieren zusammenbacken oder nicht, ist nicht abseh-, bar; bei Bewegen des Gewebes würden aber verbackene Stellen wegen der äußerst geringen Schichtdicke wohl brechen, so daß die Metallisierung an solchen Stellen unvollständig wäre. Die Wirkung als elektrischer Widerstand wird dadurch nicht beeinträchtigt.

Die Erfindung soll in einem Aspekt den Stoff der eingangs genannten Art verbessern. Besonders soll seine Verwendbarkeit für Batterien verbessert werden, indem die metallisierte Oberfläche vergrößert wird.

Gemäß der Erfindung wird diese Aufgabe dadurch gelöst, daß die gesamte Oberfläche aller Fasern, auch an den Knotenpunkten, metall- oder legierungsbeschichtet ist und die Fasern gegeneinander verschieblich sind.

Durch die allseitige Beschichtung der Fasern wird ein Maximum an metallisierter Oberfläche gewährleistet, und die Verschieblichkeit der Fasern stellt sicher, daß diese Metalloberfläche auch nutzbar ist und nicht etwa durch eng aneinandergepreßte Fasern, wie sie beim Nadelfilz der DE 40 06 106 zwangsläufig vorliegen, gemindert wird. Der erfindungsgemäße Stoff kann dabei eine an den jeweiligen Verwendungszweck angepaßte Geometrie aufweisen, wobei die Verschieblichkeit der Fasern nicht bedeutet, daß der Stoff im Gebrauch diese Geometrie verändert oder einbüßt, sondern nur, daß die Fasern an den Kreuzungsstellen nicht so aufeinandergepreßt sind, daß sie sich nicht mehr bewegen lassen. Die Strecke der Verschiebung kann dabei höchst gering sein.

Dabei liegen an den Kreuzungsstellen die metallisierten Fasern aufeinander auf und stellen somit einen ausreichenden elektrischen Kontakt her, so daß man wider Erwarten keine Knotenpunkte benötigt, an denen die Metallschichten der einzelnen Fasern miteinander verbacken sind.

In dem in der Erfindung hergestellten und verwendeten Stoff trägt also die gesamte Oberfläche aller Fasern eine galvanisch oder außenstromlos aufgebrachte Metalloder Legierungsbeschichtung. Die Kreuzungsstellen die Fasern sind nicht miteinander verbacken, sondern untergreifen einander unter voller Wahrung der Geometrie, wobei die außenstromlose oder galvanische Beschichtung der vorher leitfähig gemachten Fasern einen gleichmäßigen Auftrag des Metalls bis zu einer Dicke von 0,5 µm bis 15 µm gestattet. Unter einem galvanischen Auftrag wird hier bevorzugt eine kristalline Metallschicht verstanden, ein sogenanntes Gefüge, während beim außenstromlosen Tauchbad stets eine röntgenamorphe, glasartige Struktur entsteht. Dabei hat sich herausgestellt, daß an Überkreuzungen dicke glasartige Strukturen dazu neigen, zu verbacken bzw. sich so eng aneinander anzulegen, daß kein Zwischenraum mehr vorliegt, in den ein Elektrolyt eindringen könnte, so daß die metallische Oberfläche verringert ist. Weiter unten wird gezeigt, wie dem abgeholfen werden kann.

Besonders bevorzugt ist die Ausführungsform, bei der das Zusammenwirken von Beweglichkeit der Fasern mit deren kristalliner Beschichtung die volle Zugänglichkeit der gesamten Metalloberfläche sicherstellt, die Beweglichkeit ggf. jedoch auf ein Mindestmaß eingeschänkt werden kann, so daß ein erfindungsgemäß hergestelltes Gewebe beipielsweise auch als Präzisionssieb verwendbar ist. Bei der bevorzugten Verwendung des erfindungsgemäßen Stoffes als Batterieelektrode können die Fasern allerdings einen höheren Freiheitsgrad der Beweglichkeit aufweisen. Hier könnte auch eine glasartige Beschichtung verwendet werden, die man neuerdings auch auf galvanischem Wege erzeugen kann, etwa wenn eine besondere Korrosionsbeständigkeit gefordert wäre.

Die Dicke der Metallschicht ist zumindest 0,5 µm und kann bis 15 µm erreichen.

Als Fasermaterial kommen alle nichtmetallichen Fasern in Frage, bevorzugt sind jedoch Mineralfasern, keramische Fasern, Glasfasern und Kunststoff-Fasern. Von diesen sind wiederum Fasern aus Polyester, Polytetrafluorethylen, Polyamid, Polycarbonat, Polyethylenimin, Polyethylen, Polypropylen, Polyvinylidenfluorid, Aramid-Fasern und/oder Perfluoralkoxy-Fasern bevorzugt.

Als Metallschicht kann jedes Metall verwendet werden; bevorzugt sind unedle Metalle, besonders Ni, Al, Co und Cu, Legierungen, besonders NiPCo, NiPMn, NiP, FeNiCr, NiWo, NiPWo, NiSn, CoSn, NiMg und NiMo, und Edelmetalle, besonders Silber, Gold, Platin, Palladium, Ruthenium und Rhodium.

Die bevorzugte Verwendung der erfindungsgemäßen Stoffe, besonders Gewebe, ist die Verwendung als Funktionsmaterial für mikroporöse Elektroden in elektrochemischen Systemen, z.B. in der Batterieherstellung als Stromableiter und/oder Elektrodenmaterial in Ni/MH-Batterien und Li-Ionen-Batterien sowie in der Brennstoffzelle als Elektrode, um durch die große Oberfläche der erreichten, dreidimensionalen Strukturen und gezielte Steuerung der Topographie der abgeschiedenen Metallschichten (gezielte Herstellung von metallischen Schichten mit sehr großer Oberfläche) die Leistungsfähigkeit und Leistungsdichte der angeführten Systeme stark zu steigern. Die aktiven Massen der Batterien (Kathoden- und Anodenmaterial) können sehr gut in diese mikroporösen Elektroden eingebracht werden. Bei Li-Ionen-Polymersystemen kann dadurch eine herausragende Haftfestigkeit der aktiven Materialien erreicht werden.

Weitere bevorzugte Verwendungsgebiete des erfindungsgemaß hergestellten Stoffs liegen in der Filtertechnik, der Gasreinigung (O₂), der alkalischen Wasserelektrolyse (als positive und negative Elektrode), in der Wehrtechnik, Sicherheitstechnik und Arbeitsschutzbekleidung sowie in der Verwendung als Katalysator und Widerstandsmaterial zur Erzeugung von Wärme und für die ionisierende Luftaufbereitung in Luftreinigungsgeräten.

Ein bevorzugter Batterietyp, bei dem der erfindungsgemäße, metallisierte Stoff einsetzbar ist, sind Li,-Ionen-, Li-Ionen-Polymer- und NiMH-Batterien, wobei der Stoff als Stromableiter und Elektrode dient. Die aktiven Massen werden in die Stoffe eingebracht.

Der bevorzugte Brennstoffzellentyp ist die Niedrigtemperatur-PEM-Brennstoffzelle.

In jedem Fall wird die Stoffstruktur so optimiert, daß eine möglichst hohe Leitfähigkeit und katalytisch aktive Oberfläche (für die Verwendung als Brennstoffzellen und Katalysatoren) und eine möglichst große aktive Oberfläche erzielt werden.

Wie eingangs aufgezeigt, ist ein erfindungsgemäß hergestellter Stoff durch die bekannten Verfahren nicht herstellbar, bei denen der gesamte Stoff außenstromlos beschichtet wurde oder, nachdem er elektrisch leitfähig gemacht wurde, galvanisch beschichtet wurde, denn es gibt immer unbeschichtete Zonen an den Überkreuzungen von Fasern.

Ein möglicher Weg wäre die Herstellung eines metallisierten Filamentes und dann die Herstellung eines Stoffes aus diesem metallisierten Filament. Es wäre jedoch größte Sorgfalt beim Weben des Stoffes erforderlich, um eine Beschädigung der Metallschicht zu vermeiden, die ja so wenig wie 0,5 *µ*m Dicke aufweisen kann.

Erfindungsgemäß wird deshalb der bereits fertige Stoff aus den oben beschriebenen Materialien dadurch nachbehandelt, daß man seine Oberfläche zunächst ätzt und reinigt, dann , gegebenenfalls nach einer Aktivierung mit Palladium, galvanisch, außenstromlos oder gegebenenfalls mechanisch (Aufstäuben von Metallpulver) oder durch Sputtern, Bedampfen oder chemische Dampfabscheidung (CVD) mit einem elektrisch leitfähigen Überzug versieht und schließlich .die eigentliche Metallschicht durch außenstromloses Auftragen oder Galvanisieren aufbringt. Während dieses außenstromlosen Auftragens oder Galvanisierens stellt man im Stoff eine Relativbewegung der Fasern her, damit diese nicht ruhig aufeinanderliegen, sondern gegeneinander bewegt werden, so daß sich keine dauerhafte Überkreuzung bildet, an der unter Bildung eines metallischen Knotenpunktes zwei Fasern miteinander verbacken könnten. Die eigentliche außenstromlose Auftragung oder Galvanisierung für die Herstellung der erfindungsgemäß hergestellten metallisierten Stoffe erfolgt auf im Stand der Technik bekannte Weise.

Es wurde zwar vor längerer Zeit einmal vorgeschlagen (DE. 22 39 547), eine Litze aus einzelnen Kupfer- oder anderen Metalldrähten während der galvanischen Verzinnung teilweise spannungsfrei, mit wechselnder Spannung und mit wecchselnder Krümmung zu führen, so daß die Einzeldrähte beim Durchlaufen des Bades einer andauernden Relativbewegung zueinander ausgesetzt werden, wodurch sie allseitig galvanisch beschichtet werden können. Voraussetzung für das Verfahren dieser Druckschrift ist jedoch die Steifigkeit von Metalldrähten, die erlaubt, daß die Litzen spannungsfrei geführt werden können, während dies bei einem Stoff nicht möglich ist.

Die Erfindung hat jedoch erkannt, daß auch die Fasern eines Stoffes trotz des Erfordernisses einer ständigen Spannung desselben beim Führen durch ein Bad einer ständigen gegenseitigen Relativbewegung ausgesetzt werden können, die groß genug ist, damit beim außenstromlosen Auftragen oder Galvanisieren ein Verbacken der Kreuzungspunkte vermieden und eine allseitige, fehlerfreie Beschichtung aller Fasern erzielt wird. So wurde die Herstellung des erfindungsgemäßen metallisierten Stoffs ermöglicht. Das Herstellungsverfahren wird nachstehend in Einzelheiten besprochen.

Bevor ein galvanische Schicht auf einen Nichtleiter aufgebracht werden kann, muß dieser zunächst mit einem elektrisch leitenden Überzug versehen werden.

Ein außenstromloses Aufbringen eines elektrisch leitenden Überzuges kann beispielsweise aus dem Aufbringen von Sulfiden und Polysulfiden bestehen. Dabei werden bevorzugt Cobalt-, Mangan- oder Zinnsulfide und -polysulfide auf die Oberfläche des Stoffs aufgebracht, danach erfolgt ein Zwischenspülen und ein anschließendes Eintauchen in eine Sulfid-haltige Vernetzerlösung, wodurch eine festhaftende Metallsulfid/-polysulfid-Schicht erzeugt wird.

Weiter kann der leitfähige Überzug auch durch Bedampfen, Sputtern mit einem Metall oder mit CVD hergestellt werden.

Es ist aber auch möglich, den Schritt in drei Unterschritte aufzuteilen: in das Konditionieren, die Aktivierung und die außenstromlose oder galvanische Metallisierung der Oberfläche. Hierauf wird weiter unten noch näher eingegangen.

Vor dem außenstromlosen Aufbringen einer Sulfid/-Polysulfidschicht, dem Sputtern, Bedampfen, der CVD oder dem Konditionieren wird die Oberfläche im allgemeinen gereinigt und geätzt, wodurch diese für die weiteren Schritte vorbereitet wird. Bevorzugt erfolgt diese Vorbereitung dadurch, daß man dem Stoff einem atmosphärischen Plasma aussetzt.

Hierbei handelt es sich um ein nicht thermisches Plasma. Durch eine sehr hohe Anregungsfrequenz, die zwischen mehreren Kilohertz und etwa 3 Gigahertz liegt, und durch die daraus resultierenden, hohen Felddichten entsteht ein Nicht-Gleichgewichtsplasma, bei dem die Elektronenenergie im Plasma höher ist als die Energie der Ionen und der angeregten Teilchen.

Das Plasma setzt sich aus unschädlichen Gasen wie Sauer-stoff oder Luft zusammen, deren physikalische und chemische Wirkung auf der hohen Teilchenenergie basiert.

Entsprechend dem Gewebematerial wird das Plasmagas gewählt, etwa Sauerstoff, Stickstoff, Argon, Ammoniak, CF₄ o. dgl.. Bei der Aktivierung im Mikrowellenplasma werden auf, der Stoff- bzw. Faseroberfläche, in der Regel der Oberfläche eines Polymers, polare Gruppen eingebaut. Im Plasma werden bei Raumtemperatur z.B. durch die UV-Strahlung Polymerradikale gebildet, die mit den freien Radikalen des entsprechenden Plasmagases reagieren. Dadurch entstehen polare Gruppen, z.B. Hydroxyl-, Carboxyloder Carbonylgruppen sowie Amingruppen, welche in die Polymeroberflächen eingebaut werden. Diese Effekte sind nur auf den unmittelbarten Oberflächenbereich beschränkt (1 µm bis 10 µm), so daß der Polymer-Grundkörper unangetastet bleibt.

Bevorzugt wird eine Plasmakammer verwendet, die von zwei Seiten her derart zugänglich ist, daß der zu aktivierende Stoff durch die Kammer hindurch kontinuierlich durch das Plasma geführt wird. Die Höhe der Kammer reicht aus, um Gewebe und Vliese aller Art hindurchzuführen. Die beiderseits offene Kammer hat aber keine Abdichtung und wird auch nicht evakuiert. Es werden aber die Kammerwände gekühlt, um ein langzeitstabiles Plasma erzeugen zu können. Die Kühlung ist bevorzugt eine Luftkühlung.

Die Aktivierung erfolgt bevorzugt mittels einer kolloidalen Palladiumverbindung, wie das dem Grunde nach bereits durch die DE 37 43 743 bekannt ist. Dieses Verfahren hat sich als vorteilhaft gegenüber vielen anderen, bekannten Verfahren erwiesen.

Bei der außenstromlosen Metallisierung wird auf bekannte Weise ein Metallion, das z.B. von einem Metallsalz abstammt, mittels eines Reduktionsmittels außenstromlos als Metall auf dem aktivierten Stoff abgeschieden. In einer Ausführungsform ist das Metall das gleiche, das bei einer fakultativen anschließenden Galvanisierung aufgebracht wird. Dabei können alle chemisch reduzierbaren Metallionen verwendet werden, also auch Ionen von unedlen Metallen wie Nickel und Aluminium.

Der Metallisierungsüberzug kann nach erfolgter Aktivierung aber auch galvanisch aufgebracht werden.

Der elektrochemische Aspekt der außenstromlosen oder galvanischen Aufbringung der Metall- oder Legierungsbeschichtung auf das leitfähig gemachte Stoffsubstrat ist, wie bereits erwähnt, an sich bekannt und breit in der Literatur beschrieben. Dabei können z.B. alle oben bei der Besprechung des erfindungsgemäß hergestellten Stoffes erwähnten Metalle und Legierungen aufgebracht werden. Zwei beispielhafte außenstromlose Abscheidungen und zwei galvanische Abscheidungen werden in dem nachstehenden Beispiel beschrieben.

Was die gleichzeitiger Bewegung des Stoffes während des außenstromlosen oder galvanischen Auftrags anbelangt, so ist vorstellbar, daß das Bad für die außenstromlose oder galvanische Auftragung (im folgenden "Elektrolyt-Bad") selbst zur Bewegung benutzt und der Stoff chargenweise in eine Art galvanischen "Whirlpool" eingelegt wird. Dies wäre jedoch ein relativ unproduktives Verfahren.

In der Erfindung wird demgemäß ein produktiveres, kontinuierliches Verfahren bevorzugt, bei dem eine definierte Relativbewegung aller Fasern durch mechanische Beanspruchung des Stoffes erfolgt, während dieser durch das Elektrolyt-Bad gefördert wird.

Zu diesem Zweck ist eine Vorrichtung bevorzugt, bei welcher der Stoff über mindestens zwei Walzen gefördert wird, von denen mindestens eine elliptisch ist. Werden aufeinanderfolgend zwei elliptische Walzen verwendet, dann müssen sie bevorzugt die gleiche Drehzahl haben, dürfen aber mit ihren großen Querschnittsachsen nicht parallel stehen.

Bei der Förderung sorgt die elliptische Walze dafür, daß die von Stoff überspannte Strecke zwischen zwei Walzen sich ständig rhythmisch ändert, so daß der Stoff ständig aufeinanderfolgend in Förderrichtung gedehnt und wieder nachgelassen wird. Im Falle eines Gewebes werden die Kettfäden gedehnt und verlagern sich dementsprechend gegenüber den Schußfäden.

Weiter bevorzugt ist mindestens eine zusätzliche Walze vorgesehen, die eine Umfangsprofilierung aufweist, die schräg zum Umfang verläuft, etwa schrägverlaufende, elliptische Nuten in der zylindrischen Außenoberfläche der zusätzlichen Walze. Diese ergreift bei einem Stoff in Form eines Gewebes die Kettfäden und bewegt sie relativ zu den Schußfäden in deren Längsrichtung.

Die Relativbewegungen der Kettfäden zu den Schußfäden erfolgen, wie erläutert, in definierter Weise. Aber auch bei einem Vlies werden durch die erfindungsgemäße Vorrichtung die Fäden relativ zueinander bewegt, allerdings in zufälliger Weise.

Ein bevorzugtes Elektrolyt-Bad weist einer Reihe von elliptischen Walzen auf, die über dem Flüssigkeitsspiegel angeordnet sind, und jeweils zwischen zwei elliptischen Walzen eine zusätzliche Walze, die sich unter dem Flüssigkeitsspiegel befindet. Der Stoff läuft so im Zickzack von einer elliptischen Walze zu in das Bad zu einer zusätzlichen Walze und von dieser wieder aus dem Bad heraus, wobei der Umschlingungswinkel von ca. 270° an jeder der Walzen deren Wirkung voll zur Geltung bringt. Nach mehreren Eintauchvorgängen, zum Beispiel fünf, läuft der Stoff aus dem Elektrolyt-Bad heraus, wobei jede der Fasern rundum metallisiert ist und keine Faser an der anderen anbäckt.

In einem weiteren Aspekt betrifft die vorliegende Erfindung ein Verfahren zur Herstellung eines Überzugs auf einem Substrat, der mindestens einen Lithium-haltigen Spinell umfaßt, wobei der Lithium-haltige Spinell zusammen mit einem Metall oder einer Legierung auf das Substrat aufgebracht wird. Der Substrat-Überzug wird außenstromlos oder galvanisch aus einer wäßrigen Lösung einer oder mehrerer löslicher ionischer Verbindungen des Metalls oder der Legierung und einer mit Hilfe eines Tensids/erhaltenen Dispersion des oder der Lithium-haltigen Spinells oder Spinelle in der Lösung, die damit zu einer Dispersionsmischung wird, aufgebracht.

Bei den löslichen ionischen Verbindungen der Metalle und Metallbestandteile der Legierungen handelt es sich gewöhlich um einfache wasserlösliche Metallsalze. Die ionische Verbindung des möglichen Legierungsbestandteils Phosphor ist gewöhnlich ein Hypophosphit.

Bei dem Substrat handelt es sich um einen leitfähig gemachten Stoff aus an sich nicht-leitfähigen Fasern.

Der Stoff aus an sich nicht leitfähigen Fasern kann beispielsweise durch außenstromloses Aufbringen oder galvanisches Aufbringen eines leitfähigen Überzugs, der ausgewählt ist aus galvanisch, außenstromlos oder durch Bedampfen, Sputtern oder CVD aufgebrachtem Metall, Metallsulfid und/oder -polysulfid oder einem leitfähigen Polymer, leitfähig gemacht werden.

Der Stoff kann ein Material umfassen, das ausgewählt ist aus Polyester, Polytetrafluorethylen, Polyamid, Polycarbonat, Polyethylenimin, Polyethylen; Polypropylen, Polyvinylidenfluorid, Aramid-Fasern und Perfluoralkoxy-Fasern.

Das Substrat ist ein Stoff aus an sich nicht leitfähigen Fasern, wozu neben Fasern aus den eben erwähnten Kunststoffen auch Glasfasern, Mineralfasern und keramische Fasern zählen, welcher vor der außenstromlosen oder galvanischen Aufbringung des Überzugs aus Metall oder Legierung und Lithium-haltigem Spinell wie oben im Zusammenhang mit der Herstellung des erfindungsgemäßen Stoffs beschrieben behandelt wird.

Der feinverteilte Spinell wird durch ein Dispergiermittel in Dispersion gehalten, bei dem es sich bevorzugt um ein anionisches Tensid handelt, wie z.B. ein handelsübliches Tensid der Aerosol OT Serie (Cyanamid, Deutschland). Bei der außenstromlosen Abscheidung oder der Galvanisierung wird er dann in feinverteilter, dipergierter Form in das Metall oder die Legierung, das bzw. die eine Matrix für den Spinell bildet (abgeschieden aus den wasserlöslichen ionischen Verbindungen), eingebaut. Es können bis zu 8% oder mehr, bezogen auf das Gesamtüberzugsgewicht, Spinell in die Matrix eingebaut werden. Die genaue Einbaurate kann durch Parameter wie spezieller Tensidzusatz, spezielle Abscheidetemperatur und spezielle Konzentration des in der Lösung dispergierten Spinells gesteuert werden.

Der oder die Lithium-haltige(n) Spinell(e) ist (sind) bevorzugt aus LiMn₂O₄, LiCoO₂, LiNiO₂, LiTiS₂ und LiVSe₂ ausgewählt.

Neben dem dipergierten Spinell können auch noch Kohlenstoff-Dispersionen und/oder Dispersionen eines inerten Kunstharz-Binders in der Dispersionsmischung vorliegen und zusammen mit dem Spinell in das Matrixmetall oder die Matrixlegierung eingebaut werden. Der Kohlenstoff dient zum Schutz des Überzugs vor Korrosion, und der inerte Kunstharz-Binder dient u.a. als eine Art "Puffer" für den Kohlenstoff, da bei der Verwendung der erfindungsgemäßen überzogenen Substrate als Lithium-Ionen-Kathode in einer wiederaufladbaren Batterie (Sekundärzelle) die Lithium-Ionen beim Entladen der Batterie in den Kohlenstoff interkalieren und beim Laden der Batterie wieder aus diesem herausdiffundieren, wodurch die Größe der Kohlenstoffteilchen verändert wird. Dabei besteht die Gefahr eines Zerbröselns des Kohlenstoffs, die durch die Verwendung des Binders beseitigt wird.

Als inerter Kunstharz-Binder können z.B. Polytetrafluorethylen und besonders bevorzugt Polyvinylidenfluorid verwendet werden.

Als Kohlenstoff wird bevorzugt ein Kohlenstoff mit einer Größe im Nanometer-Bereich verwendet.

Weiter enthält die Dispersionsmischung gewöhnlich eine Säure, bevorzugt Borsäure. Auch kann ein Hypochlorit als Reduktionsmittel in der Mischung vorliegen.

Die außenstromlos oder galvanisch aufgebrachten Matrixmetalle oder Matrixlegierungen sind bevorzugt aus Ni, Cu, Al, Co, Ag, Au, Pt, Pd, Ru, Rh, NiPCo, NiPMn, NiP, FeNiCr, NiWo, NiPWo, NiSn, CoSn, NiMg und NiMo ausgewählt.

Im Hinblick auf die Verwendung des beschichteten Substrats als Lithium-Ionen-Kathode umfaßt der Überzug besonders bevorzugt ein Metall, das aus Ni, Al und Ag ausgewählt ist.

Weiter kann der Überzug mit einem weiteren Überzug aus Aluminium, Silber, einer Legierung, Titan mit einer Dicke von 10 bis 100 nm oder Kohlenstoff zur Passivierung versehen sein. Dies ist insbesondere bei einem Nickel-haltigen Überzug vorteilhaft

Die Mengen der bei einer Galvanisierung eingesetzten Reagenzien in der Dipsersionsmischung liegen gewöhlich innerhalb der folgenden Bereiche: .
- lösliche(n) ionische(n) Verbindung(n) in einer Gesamtmenge von 240 bis 380 g/l Dispersionsmischung;
- der oder die Lithiumspinell(e) in einer Menge von 100 bis 300 g/l Dispersionsmischung;
- das Tensid in einer Menge von 1 bis 2 ml/l Lösung;
- Kohlenstoff, falls verwendet, in einer Menge von 1 bis 5 g/l Dispersionsmischung;
- inerter Kunstharz-Binder, falls verwendet, in einer Menge von 5 bis 10 g/l Dispersionsmischung.
- Borsäure in einer Menge von 10-60 g/l Dispersionsmischung.
- Hypophosphit, falls verwendet, in einer Menge von 10 bis 60 g/l Dispsersionsmischung.

Weiter beträgt der pH der Dispersionmischung beim Galvanisieren bevorzugt 3-4, und die Temperatur, bei der die Abscheidung vorgenommen wird, liegt z.B. bei 40-55°C. Die Stromdichten, die verwendet werden, liegen im Bereich von 1 bis 10, bevorzugt 2 bis 5 A/dm².

Die Dicke des abgeschiedenen Überzugs liegt bevorzugt im Bereich von 0,5 µm bis 15 µm.

Es können auch mehrere derartige Überzugsschichten auf einem Substrat aufgebracht werde.

Die Erfindung umfaßt auch ein Substrat aus einem leitfähig gemachten Stoff aus an sich nicht-leitfähigen Fasern, das einen Überzug aufweist, der ein Metall oder eine Legierung und einen oder mehrere in das Metall oder die Legierung eingebettete Lithium-haltige Spinelle umfaßt. Dabei ist das Metall oder die Legierung bevozugt ausgewählt aus Ni, Cu, Al Co, Ag, Au, Pt, Pd, Ru, Rh, NiPCo, NiPMn, NiP, FeNiCr, NiWo, NiPWo, NiSn, CoSn, NiMg und NiMo, und der oder die Spinell(e) sind bevorzugt aus LiMn₂O₄, LiCoO₂, LiNiO₂, LiTiS₂ und LiVSe₂.

Die nicht-leitfähigen Fasern des Stoffs umfassen bevorzugt Glasfasern, Mineralfasern, keramische Fasern oder Kunststoffasern. Dabei umfassen die Kunststoffasern bevorzugt ein Material, das ausgewählt ist aus aus Polyester, Polytetrafluorethylen, Polyamid, Polycarbonat, Polyethylenimin, Polyethylen, Polypropylen, Polyvinylidenfluorid, Aramid-Fasern und Perfluoralkoxy-Fasern.

Der Überzug kann weiter Kohlenstoff und/oder einen inerten Kunstharz-Binder enthalten, bei dem es sich bevorzugt um Polyvinylidenfluorid handelt.

Die durch das unmittelbar vorstehend beschriebene Verfahren erhältlichen, überzogenen Substrate werden bevorzugt als Kathoden in Lithium-Ionen-Batterien verwendet. Die Vorteile dieser Kathoden bestehen darin, daß die aktive Masse zusammen mit dem für die Ableitung wesentlichen Material in gewünschter Schichtdicke aufgetragen werden kann, was einen sehr kompakten Verbundwerkstoff mit einer praktisch porenfreien Schicht ergibt.

Auch Anoden, die für eine Lithium-Ionen-Batterie verwendbar sind, können durch eine Dispersionsabscheidung auf einem der oben genannten Substrate hergestellt werden. Ein typisches Beispiel dafür ist eine mit Kupfer/Graphit überzogene Anode.

Dabei ist die Zusammensetzung der Dispersionsmischung für eine galvanische Abscheidung zum Beispiel wie folgt:
- 160 bis 240 g/l eines lösliche Kupfersalzes, z.B. Kupfersulfat
- 40 bis 100 g /l Schwefelsäure
- 30 bis 150 mg /l eines Chlorids (z. B. Natriumchlorid)
- 100 bis 150 g/l Graphit und
- 1-2 ml/l Tensid.

Das Galvanisierungsverfahren wird dabei bevorzugt bei einer Temperatur von 20 bis 40°C und einer Stromstärke im Bereich von 1 bis 10, bevozugt 2 bis 5 A/dm² durchgeführt. Bei den angegebenen Graphitmengen können Einbauraten des Graphits in dem Kupfer von 1,5 bis 3 Gew.-%, bezogen auf das Gesamtgewicht des Überzugs, erhalten werden.

Aus diesen Kathoden und Anöden, die gewöhnlich in einer einzigen Schicht das für die Ableitung wichtige leitfähige Material sowie die aktive Kathoden- bzw. Anodenmasse enthalten, kann eine komplette Lithium-Ionen-Batterie hergestellt werden. Die Anoden und Kathoden weisen dabei ein Höchstmaß an Kompaktheit und einen praktisch porenfreien Überzug auf.

### Beispiel

### 1. Ätzung und Reinigung

Der Stoff aus elektrisch nichtleitenden Fasern wird in der oben beschriebenen Weise einem Atmosphärenplasma ausgesetzt, dadurch wird die Oberfläche gereinigt und angeätzt, so daß sie für weitere Behandlungen aufnahmefähig ist.

### 2. Konditionierung der Oberfläche

In einem Aktivator der folgenden Zusammensetzung:

| | |
|---|---|
| 0 - 5% | 2-Propanol, |
| 10-25% | 2-Amino-Ethanol |

wird bei einer Temperatur von 50 - 80°C während 5 - 10 min eine gleichmäßige Bedeckung der Faseroberfläche erzielt und die Absorption der Palladiumkeime im nachfolgenden Schritt gefördert.

### 3. Aktivierung auf der Basis kolloidaler Palladiumverbindung

Bei der Aktivierung der Faseroberfläche werden kolloidale Palladiumverbindungen an der Oberfläche absorbiert. Verwendet wird:

| | |
|---|---|
| 6g/l | Zinnchlorid |
| 20 - 400 ppm | Palladium. |

Die Temperatur beträgt Raumtemperatur bis 50°C; die Behandlungsdauer beträgt 3 - 10 min.

### 4. Außenstromlose (chemische) Metallisierung

| Beispiel Kupferelektrolyt : | |
|---|---|
| 10 - 50 g/l Kupfersulfat | 10 - 50 g/l Rochellesalz |
| 5 - 20 g/l Natronlauge | 10 - 100 g/l Formaldehyd |
| PH-Wert: 10,5 - 12,5 | |
| Temperatur: 20 - 50°C | |
| Dauer: 1 - 10 min. | |

| Beispiel Nickelelektrolyt : | |
|---|---|
| 10 - 30 g/l Nickelsulfat | 10 - 50 g/l Natriumhypophosphit |
| 50 - 100 g/l Ammoniak (25%-ig) | |
| PH-Wert: 8 - 10 | |
| Temperatur: 30 - 50 °C | |
| Dauer: 3 - 10 min. | |

### 5. Galvanischer Metallauftrag

| Beispiel Kupferelektrolyt: | |
|---|---|
| 60 - 249 g/l Kupfer(II)-sulfat-5-Hydrat (entspricht 20 - 60 g/l Cu) | |
| 40 - 200 g/l Schwefelsäure | |
| 30 - 150 g/l Chlorid | |
| Netzmittel | |
| Temperatur: 20 - 35 °C | |
| Stromdichte: 1 - 8A/dm². | |

| Beispiel Nickelelektrolyt: | |
|---|---|
| 240 - 310 g/l Nickelsulfat | 45 - 50 g/l Nickelchlorid |
| 30 - 40 g/l Borsäure | |
| Netzmittel | |
| pH-Wert: 3 - 5 | |
| Temperatur: 40 - 70 °C | |
| Stromdichte: 3 - 10 A/dm². | |

Ein schematisches Ausführungsbeispiel einer Vorrichtung zum Metallisieren von Stoff nach der Erfindung sowie eine schematische Darstellung von Lithium-Ionen-Batterien ist in der beigefügten Zeichnung gezeigt; dort sind
Fig. 1 eine geschnittene Gesamtdarstellung der Vorrichtung,
Fig. 2 eine vergrößerte, geschnittene Darstellung der Walzenfolge des galvanischen Bades,
Fig. 3 eine Draufsicht auf die untere Walze der Walzenfolge aus Fig. 2,

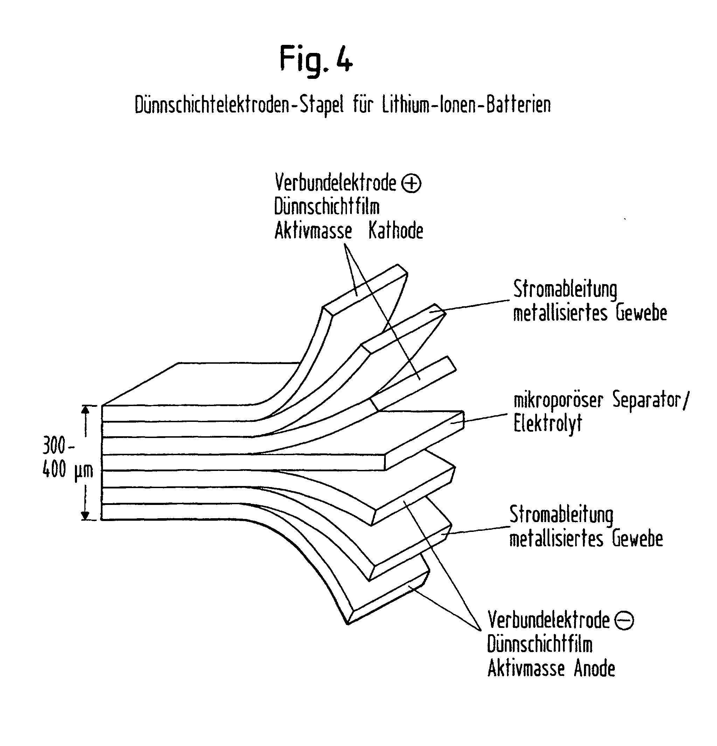

Fig. 4 eine schematische perspektivische Darstellung einer Lithium-Ionen-Batterie mit Dünnschicht-Verbundelektroden und

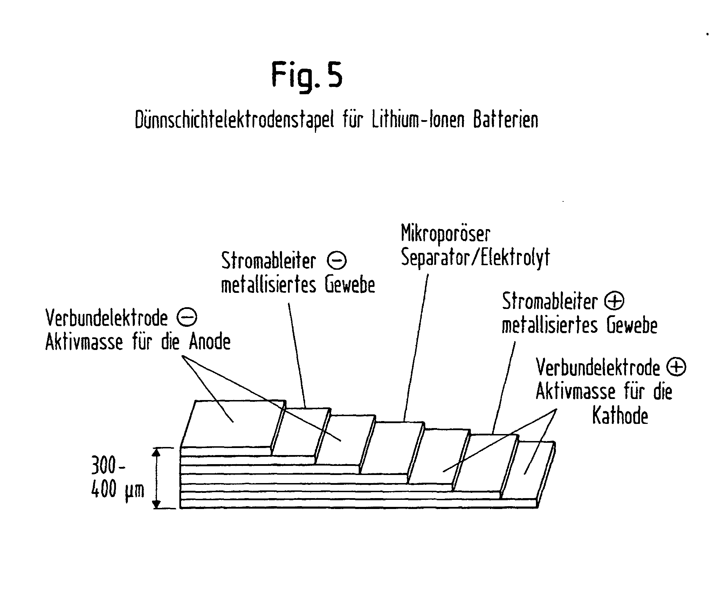

Fig. 5 eine schematische geschnittene Darstellung einer Lithium-Ionen-Batterie mit Dünnschicht-Verbundelektroden.

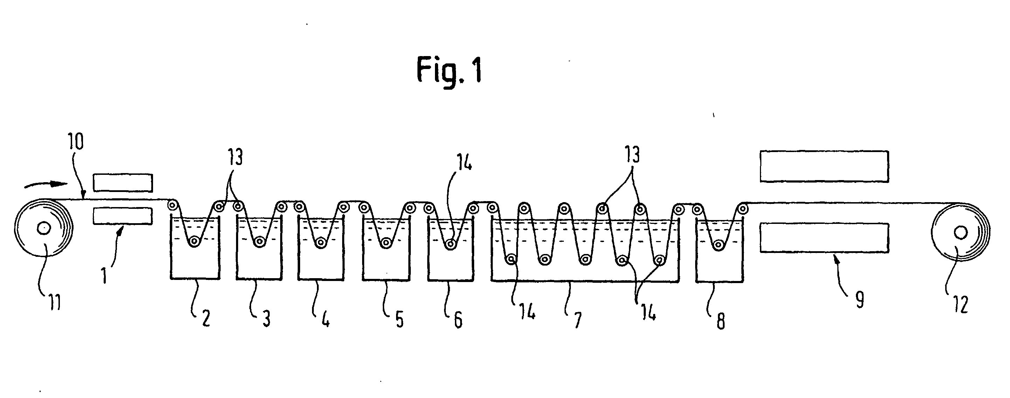

Fig. 1 zeigt eine Vorrichtung zum Herstellen eines metallisierten Stoffes. Ein gewebte Stoffbahn 10 aus Kunststoff sitzt auf einer sich abwickelnden Vorratsrolle 11 und bewegt sich kontinuierlich in Pfeilrichtung und aufeinanderfolgend
- durch eine Plasmakammer 1, in welcher Atmosphärenplasma auf den Stoff 10 einwirkt, ihn reinigt und aktiviert,
- durch ein Konditionierungsbad 2, das die Faseroberfläche aufschließt und auf die nachfolgende Aktivierung vorbereitet,
- durch ein Spülbad 3,
- durch ein Aktivierungsbad 4, in dem kolloidale Palladiumverbindungen an der Oberfläche absorbiert werden,
- durch ein außenstromloses (chemisches) Metallisierungsbad, in dem die Oberfläche der Fasern leitfähig gemacht wird,
- durch ein weiteres Spülbad 6,
- durch ein galvanisches oder außenstromloses Elektrolyt-Bad 7, in dem der Metallauftrag auf die Fasern erfolgt,
- ein noch weiteres Spülbad 8 und
- einen horizontalen Trockenschacht 9
- auf die Aufwickelrolle 12.

Die Förderwege der Atmosphärenplasmakammer 1 und des Trocknungsschachtes 9 liegen auf gleicher Höhe; in dieser Höhe sind auch Umlenkwalzen 13 angeordnet, die den horizontal ankommenden Stoff 10 in das darunterliegende Bad 2 - 8 umlenken oder den aus diesem Bad 2 - 8 herauskommenden Stoff 10 in die Horizontale und zur nächsten Umlenkwalze 13 lenken.

In jedem Bad 2 - 8 befindet sich nahe dessen Boden mindestens eine Tauchwalze 14, deren Achse parallel zu der der Umlenkwalzen 13 und Wickelrollen 11, 12 verläuft. Dabei ist in jedem der Bäder 2 - 6 und 8 je eine Tauchwalze 14 angeordnet, der jeweils zwei Umlenkwalzen 13 zugeordnet sind; im Elektrolyt-Bad 7 sind fünf Tauchwalzen 14 angeordnet, denen sechs Umlenkwalzen 13 zugeordnet sind.

Der Stoff 10 läuft von der Rolle 11 ab, durchquert im Zickzack alle Bäder sowie horizontal die Plasmakammer 1 und den Trockenschacht 9 und wird auf die Rolle 12 aufgewickelt.

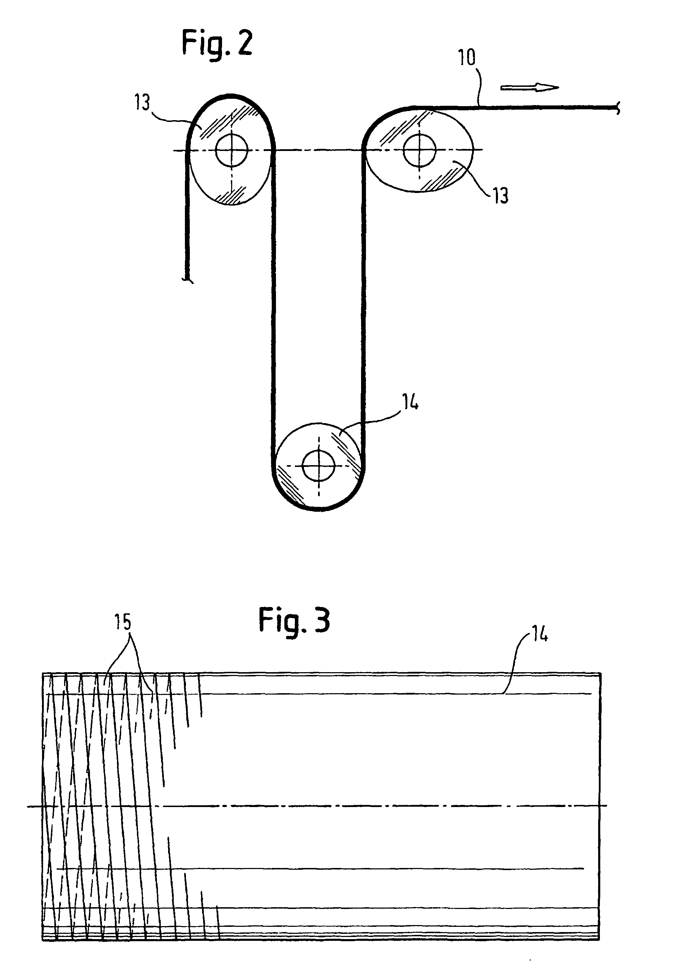

Mindestens die Umlenkwalzen 13, die dem Elektrolyt-Bad 7 zugeordnet sind, haben elliptischen Querschnitt. Die beiden Umlenkwalzen 13, die jeweils einer Tauchwalze 14 zugeordnet sind, sind mit ihrem Querschnitt so angeordnet, daß die großen Achsen des elliptischen Querschnitts aufeinander senkrecht stehen (Fig. 2).

Die Tauchwalze 14 kann nach unten federbelastet sein, um die Stoffbahn 10 immer stramm gespannt zu halten.

Die Tauchwalze 14 hat eine Umfangsprofilierung in Form elliptischer, also schräg angeordneter Nuten 15 (Fig. 3).

Wenn die Stoffbahn 10 über die Walzen 13 und 14 läuft, die entsprechend Fig. 2 und 3 ausgebildet sind, dann wird die Bahn 10 zwischen benachbarten, elliptischen Walzen 13 rhythmisch gedehnt und gleichzeitig durch das Profil 15 der Tauchwalze 14 in Querrichtung bewegt. Das Gewebe "atmet" gewissermaßen bei seiner Bewegung über die Walzen 13, 14.

Diese besonders ausgebildeten Walzen 13 und 14 sind in erster Linie dem Elektrolyt-Bad 7 zugeordnet, wo sie dafür sorgen müssen, daß Fasern an Überkreuzugsstellen nicht zusammenbacken. Sie sind aber auch bei den anderen Bädern 2 - 6 und 8 von Nutzen, weil die Bewegung der Fasern die rasche Benetzung des Stoffes 10 im jeweiligen Bad fördert und dadurch die Behandlung des Stoffes 10 gleichmäßiger erfolgen läßt und verkürzt.

Einzelne oder alle der Walzen 13, 14 können angetrieben sein, ebenso wie die Aufwickelrolle 12. Die Abwickelrolle 11 kann mit einer Bremse versehen sein. Die Höhe der Walzen 14 kann individuell eingestellt werden, um auf diese Weise die Verweilzeit des Stoffes 10 im entsprechenden Bad einzustellen.

## Patentansprüche

1. Batterie oder Brennstoffzelle, umfassend einen metallisierten Stoff aus elektrisch nicht-leitenden Fasern für eine Elektrode, **dadurch gekennzeichnet, daß** die gesamte Oberfläche der Fasern mit einem Metall oder einer Legierung in einer Dicke von 0,5µm bis 15 µm beschichtet ist und die Fasern gegeneinander verschieblich sind.

2. Batterie oder Brennstoffzelle, umfassend einen metallisierten Stoff aus elektrisch nicht-leitenden Fasern, nach Anspruch 1, **dadurch gekennzeichnet, daß** die gesamte Oberfläche der Fasern eine außenstromlos oder galvanisch aufgebrachte Metall- oder Legierungsbeschichtung trägt.

3. Batterie oder Brennstoffzelle, umfassend einen metallisierten Stoff aus elektrisch nicht-leitenden Fasern, nach einem der Ansprüche 1 oder 2, **dadurch gekennzeichnet, daß** die Fasern Glasfasern, Mineralfasern, keramische Fasern und/oder Kunststoff-Fasern umfassen.

4. Batterie oder Brennstoffzelle, umfassend einen metallisierten Stoff aus elektrisch nicht-leitenden Fasern, nach Anspruch 3, **dadurch gekennzeichnet, daß** die Kunststoff-Fasern Fasern aus Polyester, Polytetrafluorethylen, Polyamid, Polycarbonat, Polyethylenimin, Polyethylen, Polypropylen, Polyvinylidenfluorid, Aramid-Fasern und/ oder Perfluoralkoxy-Fasern umfassen.

5. Batterie oder Brennstoffzelle, umfassend einen metallisierten Stoff aus elektrisch nicht-leitenden Fasern, nach einem der Ansprüche 1 bis 4, **dadurch gekennzeichnet, daß** das Metall oder die Legierung ausgewählt ist aus der Gruppe bestehend aus Ni, Cu, Al, Co, NiPCo, NiPMn, NiP, FeNiCr, NiWo, NiPWo, NiSn, CoSn, NiMg, NiMo, Ag, Au, Pt, Pd, Ru, und Rh.

6. Batterie, umfassend einen metallisierten Stoff aus elektrisch nicht-leitenden Fasern, nach einem der Ansprüche 1 bis **4, dadurch gekennzeichnet, daß** auf diesen weiter mindestens ein einen oder mehrere Lithium-haltige Spinelle und ein Matrix-Metall oder eine Matrix-Legierung enthaltender Überzug außenstromlos oder galvanisch aufgebracht ist.

7. Batterie, umfassend einen metallisierten Stoff aus elektrisch nicht-leitenden Fasern, nach Anspruch 6, **dadurch gekennzeichnet, daß** der oder die Spinell(e) ausgewählt sind aus der Gruppe bestehend aus LiMn₂O₄, LiCoO₂, LiNiO₂, LiTiS₂ und LiVSe₂.

8. Batterie, umfassend einen metallisierten Stoff aus elektrisch nicht-leitenden Fasern, nach Anspruch 6 oder 7, **dadurch gekennzeichnet, daß** der Überzug weiter Kohlenstoff enthält.

9. Batterie, umfassend einen metallisierten Stoff aus elektrisch nicht-leitenden Fasern, nach einem der Ansprüche 6 bis 8, **dadurch gekennzeichnet, daß** der Überzug weiter einen inerten Kunstharz-Binder enthält.

10. Batterie, umfassend einen metallisierten Stoff aus elektrisch nicht-leitenden Fasern, nach Anspruch 9, **dadurch gekennzeichnet, daß** der Kunstharz-Binder Polyvinylidenfluorid ist.

11. Batterie, umfassend einen metallisierten Stoff aus elektrisch nicht-leitenden Fasern, nach einem der Ansprüche 6 bis 10, **dadurch gekennzeichnet, daß** das Matrix-Metall oder die Matrix-Legierung aus Ni, Cu, Al, Co, Ag, Au, Pt, Pd, Ru, Rh, NiPCo, NiPMn, NiP, FeNiCr, NiWo, NiPWo, NiSn, CoSn, NiMg und NiMn ausgewählt ist.

12. Batterie, umfassend einen metallisierten Stoff aus elektrisch nicht-leitenden Fasern, nach einem der Ansprüche 6 bis 11, **dadurch gekennzeichnet, daß** der Überzug mit einem weiteren Überzug aus Aluminium, Silber einer Legierung oder Titan mit einer Dicke von 10 bis 100 nm überzogen ist.

13. Verfahren zur Herstellung eines metallisierten Stoffes nach einem der Ansprüche 1 bis 12, **dadurch gekennzeichnet, daß** man einen Stoff aus nicht-leitfähigen Fasern den folgenden Schritten unterzieht:
1. Ätzen und Reinigung der Oberfläche
2. außenstromloses, galvanisches oder nichtnaßchemisches Aufbringen eines elektrisch leitfähigen Überzuges, und
3. außenstromloser oder galvanischer Metallauftrag unter gleichzeitiger, gegenseitiger Relativbewegung der Fasern;
wobei die Dicke des Metallauftrags 0,5 bis 15 µm beträgt.

14. Verfahren nach Anspruch 13, **dadurch gekennzeichnet, daß** der Schritt 2) im Aufbringen von Sulfiden und Polysulfiden, vorzugsweise von Cobalt, Mangan, Zinn, mit einem Zwischenspülen und nachträglichen Tauchen in einer sulfidhaltigen Vernetzerlösung und dadurch erzeugter festhaftender Metallsulfid/-polysulfid-Schicht besteht.

15. Verfahren nach Anspruch 13, **dadurch gekennzeichnet, daß** der Schritt 2) aus den folgenden drei Unterschritten besteht:
a) Konditionieren der Oberfläche,
b) Aktivierung der Oberfläche, und
c) außenstromlose oder galvanische Metallisierung.

16. Verfahren nach einem der Ansprüche 13 bis 15, **dadurch gekennzeichnet, daß** der Schritt 1) durch Anwenden von atmosphärisches Plasma erfolgt.

17. Verfahren nach Anspruch 16, **dadurch gekennzeichnet, daß** der Stoff im Durchlaufverfahren durch eine Zone atmosphärischen Plasmas gefördert wird.

18. Verfahren nach einem der Ansprüche 15 bis 17, **dadurch gekennzeichnet, daß** die Aktivierung (Schritt b) mittels einer kolloidalen Palladiumverbindung erfolgt.

19. Verfahren nach einem der Ansprüche 13 bis 18, **dadurch gekennzeichnet, daß** der Schritt 3), nämlich außenstromloser oder galvanischer Metallauftrag bei gleichzeitiger Relativbewegung der Fasern, im kontinuierlichen Durchlaufverfahren erfolgt.

20. Verfahren nach einem der Ansprüche 13 bis 19, **dadurch gekennzeichnet, daß** es weiter das Aufbringen eines Überzugs, der ein Metall oder eine Legierung und einen oder mehrere Lithium-haltige Spinelle umfaßt, auf den metallisierten Stoff umfaßt, wobei der Überzug außenstromlos oder galvanisch aus einer wäßrigen Lösung einer oder mehrerer löslicher ionischer Verbindungen des Metalls oder der Legierung und einer mit Hilfe eines Tensid erhaltenen Dispersion des oder der Lithium-haltigen Spinells oder Spinelle in der Lösung, die dadurch zu einer wäßrigen Dispersionsmischung wird, aufgebracht wird.

21. Verfahren nach Anspruch 20, **dadurch gekennzeichnet, daß** in der Dispersionmischung weiter Kohlenstoff dispergiert ist, der gleichzeitig mit dem Metall oder der Legierung und dem oder den Spinell(en) außenstromlos oder galvanisch aufgebracht wird.

22. Verfahren nach einem der Ansprüche 20 oder 21, **dadurch gekennzeichnet, daß** in der Dispersionsmischung weiter ein inerter Kunstharz-Binder dispergiert ist, der gleichzeitig mit dem Metall oder der Legierung, dem oder den Spinell(en) und gegebenenfalls dem Kohlenstoff außenstromlos oder galvanisch aufgebracht wird.

23. Verfahren nach 22, **dadurch gekennzeichnet, daß** es sich bei dem inerten Kunstharz-Binder um Polytetrafluorethylen oder Polyvinylidenfluorid handelt.

24. Verfahren nach einem der Ansprüche 20 bis 23, **dadurch gekennzeichnet, daß** es sich bei dem Tensid um ein anionisches Tensid handelt.

25. Verfahren nach einem der Ansprüche 20 bis 24, **dadurch gekennzeichnet, daß** das Metall oder die Legierung ausgewählt ist aus der Gruppe bestehend aus Ni, Cu, Al Co, Ag, Au, Pt, Pd, Ru, Rh, NiPCo, NiPMn, NiP, FeNiCr, NiWo, NiPWo, NiSn, CoSn, NiMg und NiMo..

26. Verfahren nach Anspruch 25, **dadurch gekennzeichnet, daß** das Metall ein Metall umfaßt, das ausgewählt ist aus der Gruppe bestehend aus Ni, Al und Ag.

27. Verfahren nach einem der Ansprüche 20 bis 26, **dadurch gekennzeichnet, daß** der Überzug mit einem weiteren Überzug aus Aluminium, Silber, Titan mit einer Dicke von 10 bis 100 nm oder Kohlenstoff versehen wird.

28. Verfahren nach einem der Ansprüche 20 bis 27, **dadurch gekennzeichnet, daß** der oder die Lithium-haltige(n) Spinell(e) ausgewählt ist (sind) aus der Gruppe bestehend aus LiMn₂O₄, LiCoO₂, LiNiO₂, LiTiS₂ und LiVSe₂.

29. Verfahren nach einem der Ansprüche 20 bis 28, **dadurch gekennzeichnet, daß** die Dispersionsmischung weiter Borsäure enthält.

30. Verfahren nach einem der Ansprüche 20 bis 29, **dadurch gekennzeichnet, daß** die Dipsersionsmischung weiter ein Hypophosphit enthält.

31. Verfahren nach einem der Ansprüche 20 bis 30, **dadurch gekennzeichnet, daß** die lösliche(n) ionische(n) Verbindung(n) in einer Gesamtmenge von 240 bis 380 g/l Dispersionsmischung, der oder die Lithiumspinell(e) in einer Menge von 100 bis 300 g/l Dispersionsmischung und das Tensid in einer Menge von 1 bis 2 ml/l Dispersionsmischung in der wäßrigen Dispersionsmischung vorliegen.

32. Verfahren nach einem der Ansprüche 21 bis 31, **dadurch gekennzeichnet, daß** der Kohlenstoff in einer Menge von 1 bis 5 g/l Lösung in der wäßrigen Dispersionsmischung vorliegt.

33. Verfahren nach einem der Ansprüche 22 bis 32, **dadurch gekennzeichnet, daß** der Kunstharz-Binder in einer Menge von 5 bis 10 g/l Lösung in der wäßrigen Dispersionsmischung vorliegt.

## Claims

1. A battery or a fuel cell, comprising a metallised material of electrically non-conductive fibres for an electrode,
**characterised in that** the entire surface of the fibres is coated with a metal or an alloy in a thickness of 0.5 µm to 15 µm and the fibres are moveable relative to one another.

2. A battery or a fuel cell, comprising a metallised material of electrically non-conductive fibres, according to Claim 1,
**characterised in that** the entire surface of the fibres bears a metal or alloy coating which is applied without external current or galvanically.

3. A battery or a fuel cell, comprising a metallised material of electrically non-conductive fibres, according to one of Claims 1 or 2,
**characterised in that** the fibres comprise glass fibres, mineral fibres, ceramic fibres and/or synthetic fibres.

4. A battery or a fuel cell, comprising a metallised material of electrically non-conductive fibres, according to Claim 3,
**characterised in that** the synthetic fibres comprise fibres of polyester, polytetrafluoroethylene, polyamide, polycarbonate, polyethylenimine, polyethylene, polypropylene, polyvinylidenefluoride, aramide fibres and/or perfluoroalkoxy fibres.

5. A battery or a fuel cell, comprising a metallised material of electrically non-conductive fibres, according to one of Claims 1 to 4,
**characterised in that** the metal or the alloy is selected from the group consisting of Ni, Cu, Al, Co, NiPCo, NiPMn, NiP, FeNiCr, NiWo, NiPWo, NiSn, CoSn, NiMg, NiMo, Ag, Au, Pt, Pd, Ru, and Rh.

6. A battery, comprising a metallised material of electrically non-conductive fibres, according to one of Claims 1 to 4,
**characterised in that** onto this material additionally at least one coating, which contains one or more lithium-containing spinels and a matrix metal or a matrix alloy, is applied without external current or galvanically.

7. A battery, comprising a metallised material of electrically non-conductive fibres, according to Claim 6,
**characterised in that** the spinel or spinels are selected from the group consisting of LiMn₂O₄, LiCoO₂, LiNiO₂, LiTiS₂ and LiVSe₂.

8. A battery, comprising a metallised material of electrically non-conductive fibres, according to Claim 6 or 7,
**characterised in that** the coating also containers carbon.

9. A battery, comprising a metallised material of electrically non-conductive fibres, according to one of Claims 6 to 8,
**characterised in that** the coating also contains an inert synthetic resin binder.

10. A battery, comprising a metallised material of electrically non-conductive fibres, according to Claim 9,
**characterised in that** the synthetic resin binder is polyvinylidenefluoride.

11. A battery, comprising a metallised material of electrically non-conductive fibres, according to one of Claims 6 to 10,
**characterised in that** the matrix metal or the matrix alloy is selected from Ni, Cu, Al, Co, Ag, Au, Pt, Pd, Ru, Rh, NiPCo, NiPMn, NiP, FeNiCr, NiWo, NiPWo, NiSn, CoSn, NiMg and NiMn.

12. A battery, comprising a metallised material of electrically non-conductive fibres, according to one of Claims 6 to 11,
**characterised in that** the coating is coated with a further coating of aluminium, silver of an alloy or titanium with a thickness of 10 to 100 nm.

13. A method for producing a metallised material according to one of Claims 1 to 12,
**characterised in that** a material of non-conductive fibres is subjected to the following steps:
1. etching a cleaning of the surface
2. external current-free, galvanic or non-wet chemical application of an electrically conductive coating, and
3. external current-free or galvanic metal application with simultaneous, reverse direction relative motion of the fibres;
wherein the thickness of the metal coating is 0.5 to 15 µm.

14. A method according to Claim 13,
**characterised in that** step 2) consists in the application of sulfides and polysulfides, preferably of cobalt, manganese, tin, with intermediate rinsing and subsequent immersion in a cross-linking solution containing sulphide and a firmly adhering metal sulfide/polysulfide layer produced thereby.

15. A method according to Claim 13,
**characterised in that** step 2) consists of the following three sub-steps:
a) conditioning of the surface,
b) activation of the surface, and
c) external current-free or galvanic metallisation.

16. A method according to one of Claims 13 to 15,
**characterised in that** step 1) takes place by using atmospheric plasma.

17. A method according to Claim 16,
**characterised in that** the material is transported through a zone of atmospheric plasma in the flow-through process.

18. A method according to one of Claims 15 to 17,
**characterised in that** the activation (step b) takes place by means of a colloidal palladium compound.

19. A method according to one of Claims 13 to 18,
**characterised in that** step 3), namely external current-free or galvanic metal application, takes place during simultaneous relative motion of the fibres in the continuous flow-through process.

20. A method according to one of Claims 13 to 19,
**characterised in that** it also comprises the application of a coating, which comprises a metal or an alloy and one or more lithium-containing spinels, onto the metallised material, whereby the coating is applied without external current or galvanically from an aqueous solution of one or more soluble, ionic compounds of the metal or of the alloy and a dispersion, obtained with the aid of a tenside, of the lithium-containing spinel or spinels in the solution, which thereby becomes an aqueous dispersion mixture.

21. A method according to Claim 20,
**characterised in that** carbon is also dispersed in the dispersion mixture and is applied simultaneously with the metal or the alloy and the spinel or spinels, either without external current or galvanically.

22. A method according to one of Claims 20 or 21,
**characterised in that** an inert synthetic resin binder is also dispersed in the dispersion mixture, which binder is applied simultaneously with the metal or the alloy and the spinel or spinels and possibly the carbon, either without external current or galvanically.

23. A method according to Claim 22,
**characterised in that** the inert synthetic resin binder is a polytetrafluoroethylene or polyvinylidenefluoride.

24. A method according to one of Claims 20 to 23,
**characterised in that** the tenside is an ionic tenside.

25. A method according to one of Claims 20 to 24,
**characterised in that** the metal or the alloy is selected from the group consisting of Ni, Cu, Al Co, Ag, Au, Pt, Pd, Ru, Rh, NiPCo, NiPMn, NiP, FeNiCr, NiWo, NiPWo, NiSn, CoSn, NiMg and NiMo.

26. A method according to Claim 25,
**characterised in that** the metal comprises a metal selected from the group consisting of Ni, Al and Ag.

27. A method according to one of Claims 20 to 26,
**characterised in that** the coating is provided with an additional coating of aluminium, silver, titanium with a thickness of 10 to 100 nm or carbon.

28. A method according to one of Claims 20 to 27,
**characterised in that** the lithium-containing spinel(s) is (are) selected from the group consisting of LiMn₂O₄, LiCoO₂, LiNiO₂, LiTiS₂ and LiVSe₂.

29. A method according to one of Claims 20 to 28,
**characterised in that** the dispersion mixture also contains boric acid.

30. A method according to one of Claims 20 to 29,
**characterised in that** the dispersion mixture also contains a hypophosphite.

31. A method according to one of Claims 20 to 30,
**characterised in that** the soluble ionic compound(s) is(are) present in the aqueous dispersion mixture in a total volume of 240 to 380 g/l of dispersion mixture, the lithium spinel (s) in a volume of 100 to 300 g/l of dispersion mixture and the tenside in a volume of 1 to 2 ml/l of dispersion mixture.

32. A method according to one of Claims 21 to 31,
**characterised in that** the carbon is present in the aqueous dispersion mixture in a volume of 1 to 5 g/l of solution.

33. A method according to one of Claims 22 to 32,
**characterised in that** the synthetic resin binder is present in the aqueous dispersion mixture in a volume of 5 to 10 g/l of solution.

## Revendications

1. Batterie ou pile à combustible comprenant un matériau métallisé en fibres non conductrices d'électricité pour une électrode, **caractérisée en ce que** la surface totale des fibres est recouverte d'un métal ou d'un alliage d'une épaisseur de 0,5 µm à 15 µm et les fibres peuvent être déplacés l'une contre l'autre.

2. Batterie ou pile à combustible comprenant un matériau métallisé en fibres non conductrices d'électricité selon la revendication 1, caractérisée en que la surface totale des fibres porte un revêtement en alliage ou métallique appliqué de façon galvanique ou sans courant parasite.

3. Batterie ou pile à combustible comprenant un matériau métallisé en fibres non conductrices d'électricité selon l'une quelconque des revendications 1 ou 2, **caractérisée en ce que** les fibres comprennent des fibres de verre, des fibres minérales, des fibres céramiques et/ou des fibres plastiques.

4. Batterie ou pile à combustible comprenant un matériau métallisé en fibres non conductrices d'électricité selon la revendication 3, **caractérisée en ce que** les fibres plastiques sont des fibres en polyester, en polytétrafluoroéthylène, en polyamide, en polycarbonate, en polyéthylènimine, en polyéthylène, en polypropylène, en fluorure de polyvinylidène, en fibres d'aramides et/ou en fibres perfluoroalcoxy.

5. Batterie ou pile à combustible comprenant un matériau métallisé en fibres non conductrices d'électricité selon l'une quelconque des revendications 1 à 4, **caractérisée en ce que** le métal ou l'alliage est choisi dans le groupe constitué par Ni, Cu, Al, Co, NiPCo, NiPMn, NiP, FeNiCr, NiWo, NiPWo, NiSn, CoSn, NiMg, NiMo, Ag, Au, Pt, Pd, Ru, et Rh.

6. Batterie comprenant un matériau métallisé en fibres conductrices d'électricité selon l'une quelconque des revendications 1 à 4, **caractérisée en ce que** sur celles-ci encore un enrobage contenant au moins un ou plusieurs spinelles contenant du lithium et un métal matrice ou un alliage matrice est appliqué sans courant parasite ou de façon galvanique.

7. Batterie comprenant un matériau métallisé en fibres non conductrices d'électricité selon la revendication 6, **caractérisée en ce que** le ou les spinelles sont choisis dans le groupe constitué par LiMn₂O₄, LiCoO₂, LiNiO₂, LiTiS₂ et LiVSe₂.

8. Batterie comprenant un matériau métallisé en fibres non conductrices d'électricité selon la revendication 6 ou 7, **caractérisée en ce que** l'enrobage contient en plus du carbone.

9. Batterie comprenant un matériau métallisé en fibres non conductrices d'électricité selon l'une quelconque des revendications 6 à 8, **caractérisée en ce que** l'enrobage comprend en plus un liant en résine synthétique inerte.

10. Batterie comprenant un matériau métallisé en fibres non conductrices d'électricité selon la revendication 9, **caractérisée en ce que** le liant en résine synthétique est un fluorure de polyvinylidène.

11. Batterie comprenant un matériau métallisé en fibres non conductrices d'électricité selon l'une quelconque des revendications 6 à 10, **caractérisée en ce que** le métal matrice ou l'alliage matrice est choisi parmi Ni, Cu, Al, Co, Ag, Au, Pt, Pd, Ru, Rh, NiPCo, NiPMn, NiP, FeNiCr, NiWo, NiPWo, NiSn, CoSn, NiMg, et NiMn.

12. Batterie comprenant un matériau métallisé en fibres non conductrices d'électricité selon l'une quelconque des revendications 6 à 11, **caractérisée en ce que** l'enrobage est recouvert d'un autre enrobage en aluminium, en argent, d'un alliage ou de titane d'une épaisseur de 10 à 100 nm.

13. Procédé pour la fabrication d'un matériau métallisé selon l'une quelconque des revendications 1 à 12, **caractérisé en ce que** l'on soumet un matériau en fibres non conductrices aux étapes suivantes :
1. Attaque à l'acide et lavage de la surface ;
2. Application chimique par voie non humide, galvanique ou sans courant parasite d'un enrobage conducteur d'électricité ; et
3. Revêtement métallique galvanique ou sans courant parasite sous un mouvement relatif réciproque et simultané des fibres ;
dans lequel l'épaisseur du revêtement métallique est de 0,5 à 15 µm.

14. Procédé selon la revendication 13, **caractérisé en ce que** l'étape 2 consiste en l'application de sulfures et de polysulfures, de préférence de cobalt, de manganèse, d'étain avec un lavage intermédiaire et une immersion consécutive dans une solution de réticulant contenant du sulfure et en une couche de sulfure / de polysulfure métalliques adhérente ainsi produite.

15. Procédé selon la revendication 13, **caractérisé en ce que** l'étape 2 se compose des trois sous-étapes suivantes :
a. conditionnement de la surface ;
b. activation de la surface ; et
c. métallisation galvanique ou sans courant parasite.

16. Procédé selon l'une quelconque des revendications 13 à 15, **caractérisé en ce que** l'étape 1) est réalisée en appliquant un plasma atmosphérique.

17. Procédé selon la revendication 16, **caractérisé en ce que** le matériau est conduit dans un procédé en continu à travers une zone de plasma atmosphérique.

18. Procédé selon l'une quelconque des revendications 15 à 17, **caractérisé en ce que** l'activation (étape b) est effectuée au moyen d'un composé de palladium colloïdal.

19. Procédé selon l'une quelconque des revendications 13 à 18, **caractérisé en ce que** l'étape 3), à savoir le revêtement métallique galvanique ou sans courant parasite, est réalisée au cours d'un mouvement relatif simultané des fibres, dans un procédé en continu.

20. Procédé selon l'une quelconque des revendications 13 à 19, **caractérisé en ce qu'**il comprend en plus l'application d'un enrobage qui comprend un métal ou un alliage et un ou plusieurs spinelles contenant du lithium, sur le matériau métallisé, dans lequel l'enrobage est appliqué de façon galvanique ou sans courant parasite à partir d'une solution aqueuse d'un ou de plusieurs composés de métal ou d'alliage ionique soluble et d'une dispersion obtenue au moyen d'un tensioactif du ou des spinelles contenant du lithium dans la solution, qui devient ainsi un mélange de dispersion aqueux.

21. Procédé selon la revendication 20, **caractérisé en ce que** dans le mélange de dispersion du carbone est en plus dispersé lequel est appliqué simultanément avec le métal ou l'alliage et le spinelle ou les spinelles sans courant parasite ou de façon galvanique.

22. Procédé selon l'une quelconque des revendications 20 ou 21, **caractérisé en ce qu'**un liant en résine synthétique inerte est en plus dispersé dans le mélange de dispersion, lequel liant est appliqué simultanément avec le métal ou l'alliage, le ou les spinelle (s) et le cas échéant le carbone de façon galvanique ou sans courant parasite.

23. Procédé selon la revendication 22, **caractérisé en ce qu'**il s'agit, pour le liant de résine synthétique inerte, d'un polytétrafluoroéthylène ou de fluorure de polyvinylidène.

24. Procédé selon l'une quelconque des revendications 20 à 23, **caractérisé en ce qu'**il s'agit pour le tensioactif d'un tensioactif anionique.

25. Procédé selon l'une quelconque des revendications 20 à 24, **caractérisé en ce que** le métal ou l'alliage est choisi dans le groupe constitué par Ni, Cu, Al, Co, Ag, Au, Pt, Pd, Ru, Rh, NiPCo, NiPMn, NiP, FeNiCr, NiWo, NiPWo, NiSn, CoSn, NiMg et NiMo.

26. Procédé selon la revendication 25, caractérisé en-ce que le métal comprend un métal qui est sélectionné dans le groupe constitué par Ni, Al, et Ag.

27. Procédé selon l'une quelconque des revendications 20 à 26, **caractérisé en ce que** l'enrobage est pourvu d'un autre enrobage en aluminium, en argent, en titane, présentant une épaisseur de 10 à 100 nm ou de carbone.

28. Procédé selon l'une quelconque des revendications 20 à 27, **caractérisé en ce que** le ou les spinelle(s) contenant du lithium est (sont) choisi(s) dans le groupe constitué par LiMn₂O₄, LiCoO₂, LiNiO₂, LiTiS₂ et LiVSe₂.

29. Procédé selon l'une quelconque des revendications 20 à 28, **caractérisé en ce que** le mélange de dispersion contient en plus de l'acide borique.

30. Procédé selon l'une quelconque des revendications 20 à 29, **caractérisé en ce que** le mélange de dispersion contient en plus un hypophosphite.

31. Procédé selon l'une quelconque des revendications 20 à 30, **caractérisé en ce que** le ou les composé(s) ionique(s) soluble(s) est (sont) présent (s) en une quantité totale de 240 à 380 g/l de mélange de dispersion, le ou les spinelles de lithium est (sont) présent(s) en une quantité de 100 à 300 g/l de mélange de dispersion et le tensioactif en une quantité de 1 à 2 ml/l de mélange de dispersion dans le mélange de dispersion aqueux.

32. Procédé selon l'une quelconque des revendications 21 à 31, **caractérisé en ce que** le carbone est présent en une quantité de 1 à 5 g/l de solution dans le mélange de dispersion aqueux.

33. Procédé selon l'une quelconque des revendications 22 à 32, **caractérisé en ce que** le liant en résine synthétique est présent en une quantité de 5 à 10 g/l de solution dans le mélange de dispersion aqueux.
